# EUROPÄISCHE PATENTSCHRIFT

(11) **EP 1 055 587 B1**
(45) Veröffentlichungstag und Bekanntmachung des Hinweises auf die Patenterteilung: **08.10.2003**
(21) Anmeldenummer: 00109482.0
(22) Anmeldetag: 04.05.2000
(51) Int. Cl.: B62D 25/08

(54) **Mehrteilige Stirnwand für eine Kraftfahrzeugrohbaukarosserie**
Bulkhead made of several pieces for a motor vehicle structure
Cloison pare-feu composée de plusieurs pièces pour carosserie de véhicule automobile

(30) Priorität: 22.05.1999 DE 19923737
(43) Veröffentlichungstag der Anmeldung: 29.11.2000
(73) Patentinhaber: DaimlerChrysler AG, 70567 Stuttgart (DE)
(72) Erfinder: Benz, Eberhard, 71116 Gärtringen (DE); Zolke, Oliver, 71139 Ehningen (DE)

(56) Entgegenhaltungen:
- DE-A- 3 720 847
- US-A- 2 664 308
- US-A- 5 611 593

## Beschreibung

Die Erfindung betrifft eine mehrteilige Stirnwand für eine Rohbaukarosserie eines Kraftfahrzeugs und insbesondere eines Personenkraftfahrzeugs.

Die Stirnwand der Rohbaukarosserie eines Personenkraftfahrzeugs trennt die Fahrgastzelle vom Frontraum der Karosserie, in dem die Lenkeinrichtung und meist auch das Antriebsaggregat des Kraftfahrzeugs untergebracht sind. Dementsprechend ist die Stirnwand im wesentlichen senkrecht zur Fahrzeuglängsrichtung in der Rohbaukarosserie angeordnet. Sie wird durch verschiedene andere Bauteile wie Lenksäule oder Lüftungskanäle durchsetzt und ist zu diesem Zweck mit entsprechenden Ausschnitten versehen. Zwei topfförmige Vertiefungen in der Stirnwand bilden die Fußräume für die Frontinsassen des Kraftfahrzeugs. Stirnwände werden meist einteilig in einem mehrstufigen Tiefziehverfahren aus einer Blechtafel gefertigt und an einigen Stellen durch Aufschweißen zusätzlicher Blechabschnitte verstärkt.

Vor allem in der Anlaufphase einer Kraftfahrzeugfertigung stellt man gelegentlich fest, daß nicht tolerierbare Paßungenauigkeiten eine Maßänderung bestimmter Rohbauteile erforderlich machen. Ist von einer solchen Maßänderung die Stirnwand betroffen, so sind in aller Regel neue Tiefziehwerkzeuge für die Stirnwandfertigung zu beschaffen. Dies verursacht erhebliche direkte, aber auch indirekte Kosten, da die Herstellung der Tiefziehwerkzeuge einige Zeit in Anspruch nimmt und sich somit der Beginn der Serienfertigung des Kraftfahrzeugs verzögert.

Aus der DE 37 20 847 C2 ist eine mehrteilige Stirnwand bekannt, die aus einem Oberteil und einem Unterteil besteht, wobei bei einem der Ausführungsbeispiele das Unterteil die Oberschale eines Gabelträgers bildet. Das Ober- und das Unterteil sind über Anschlussflansche miteinander verbunden, deren Schiebeebenen parallel zur Bodenebene des Kraftfahrzeugs verlaufen. Beide Teile sind jeweils aus einem tiefgezogenen symmetrischen Topf gefertigt, der entlang einer Symmetrieebene getrennt wird. Anschließend werden die getrennten Topfteile um eine vertikale Achse jeweils um 90° geschwenkt und anschließend miteinander zum Ober- bzw. zum Unterteil verschweißt. Aufgrund der Mehrteiligkeit kann die Stirnwand aus Blechen unterschiedlicher Stärke bestehen, wodurch sich unter Berücksichtigung der inhomogenen räumlichen Verteilung der bei einem Aufprall wirkenden Kräfte eine Gewichtsreduktion erzielen lässt. Falls wie oben erläutert eine Maßänderung der Stirnwand notwendig wird, braucht gegebenenfalls nur für eines der beiden Teile der Satz von Tiefziehwerkzeugen ausgetauscht zu werden.

Aus der US-A-5 611 593 ist eine mehrteilige Stirnwand einer Kraftfahrzeugrohbaukarosserie nach dem Oberbegriff des Patentanspruches 1 bekannt, bei welcher zwei in Fahrzeugquerrichtung angeordnete Stirnwandteile über Anschlussflansche miteinander verbunden sind. Mit solchen Stirnwandteilen können nicht tolerierbare Passungenauigkeiten nicht ausgeglichen werden. Auch in diesem Fall wird eine Maßänderung der Bauteile mit Hilfe von geänderten Tiefziehwerkzeugen erforderlich.

Es stellt sich die Aufgabe, diese gattungsgemäße Kraftfahrzeugstirnwand weiter zu verbessern, und zwar insbesondere hinsichtlich der Kosten, die eine nachträgliche Maßänderung der Stirnwand verursacht.

Die Erfindung löst diese Aufgabe durch Bereitstellen einer Stirnwand mit den Merkmalen des Anspruchs 1. Bei dieser Stirnwand sind wenigstens zwei in Fahrzeugquerrichtung benachbarte Stirnwandteile über Anschlussflansche miteinander verbunden, deren Schiebeebenen im wesentlichen senkrecht zur Fahrzeuglängsrichtung angeordnet sind. Durch diese konstruktive Ausgestaltung können in Fahrzeugquerrichtung benachbarte Stirnwandteile in dieser Richtung relativ zueinander verschoben werden, um einen Ausgleich für Passungenauigkeiten zu schaffen. Bei einer Maßänderung kann dadurch in vielen Fällen auf die Herstellung neuer Tiefziehwerkzeuge verzichtet werden. Statt dessen werden lediglich die mit den vorhandenen Werkzeugen hergestellten Stirnwandteile etwas anders als ursprünglich vorgesehen zueinander ausgerichtet und miteinander verschweißt. Vor allem, wenn die Stirnwand aus mehr als zwei derartigen Stirnwandteilen zusammengesetzt ist, ergeben sich weitere fertigungstechnische Vorteile. So lassen sich die einzelnen Stirnwandteile in deutlich weniger Ziehstufen fertigen, da die räumliche Komplexität der einzelnen Teile geringer ist im Vergleich zu einer ein- oder zweiteiligen Stirnwand.

Um die Verschiebbarkeit in Fahrzeugquerrichtung zu ermöglichen, können gemäß Anspruch 2 die wenigstens zwei in Fahrzeugquerrichtung benachbarten Stirnwandteile mit wenigstens einem in Richtung der Fahrzeugvertikalen dazu benachbarten Stirnwandteil über Anschlußflansche miteinander verbunden sein, deren Schiebeebenen im wesentlichen senkrecht zur Fahrzeuglängsrichtung angeordnet sind. Alternativ hierzu können gemäß Anspruch 3 die Schiebeebenen auch im wesentlichen senkrecht zur Fahrzeugvertikalen angeordnet sein. Welcher der beiden Varianten der Vorzug zu geben ist, hängt insbesondere davon ab, ob zusätzlich zu Maßänderungen in der Fahrzeugquerrichtung eher Maßänderungen in der Fahrzeugvertikalen oder in der Fahrzeuglängsrichtung zu erwarten sind.

Bei einer Ausgestaltung nach Anspruch 4 sind mit der A-Säule der Rohbaukarosserie benachbarte Stirnwandteile mit dieser über Anschlußflansche miteinander verbunden, deren Schiebeebenen im wesentlichen senkrecht zur Fahrzeugquerrichtung angeordnet sind. Dadurch wird eine Verschiebbarkeit sowohl in Fahrzeuglängsrichtung als auch in Richtung der Fahrzeugvertikalen ermöglicht.

Bei einer Ausgestaltung nach Anspruch 5 sind mit einem Windschutzscheibenquerträger der Rohbaukarosserie benachbarte Stirnwandteile mit diesem über Anschlußflansche miteinander verbunden, deren Schiebeebenen im wesentlichen senkrecht zur Fahrzeugvertikalen angeordnet sind. Diese Ausrichtung der Anschlußflansche ermöglicht eine Verschiebbarkeit relativ zu dem Windschutzscheibenquerträger sowohl in Fahrzeuglängs- als auch in Fahrzeugquerrichtung.

Bei einer Ausgestaltung nach Anspruch 5 sind mit einem Windschutzscheibenquerträger der Rohbaukarosserie benachbarte Stirnwandteile mit diesem über Anschlußflansche miteinander verbunden, deren Schiebeebenen im wesentlichen senkrecht zur Fahrzeugvertikalen angeordnet sind. Diese Ausrichtung der Anschlußflansche ermöglicht eine Verschiebbarkeit relativ zu dem Windschutzscheibenquerträger sowohl in Fahrzeuglängs- als auch in Fahrzeugquerrichtung.

Bei einer Ausgestaltung nach Anspruch 6 sind mit einem Fahrzeugboden der Rohbaukarosserie benachbarte Stirnwandteile mit diesem über Anschlußflansche miteinander verbunden sind, deren Schiebeebenen im wesentlichen senkrecht zur Fahrzeugvertikalen angeordnet sind. Diese Ausrichtung der Anschlußflansche ermöglicht eine Verschiebbarkeit relativ zu dem Fahrzeugboden sowohl in Fahrzeuglängs- als auch in Fahrzeugquerrichtung.

Bei einer Ausgestaltung nach Anspruch 7 sind mit einem Fahrzeuglängsträger der Rohbaukarosserie benachbarte Stirnwandteile mit diesem über Anschlußflansche miteinander verbunden sind, deren Schiebeebenen im wesentlichen senkrecht zur Fahrzeuglängsrichtung angeordnet sind. Diese Ausrichtung der Anschlußflansche ermöglicht eine Verschiebbarkeit relativ zu dem Fahrzeuglängsträger sowohl in Fahrzeugquerrichtung als auch in der Fahrzeugvertikalen.

Bei einer Ausgestaltung nach Anspruch 8 sind mit einer Lenkradanbindung der Rohbaukarosserie benachbarte Stirnwandteile mit dieser über Anschlußflansche miteinander verbunden sind, deren schiebeebenen im wesentlichen senkrecht zur Fahrzeugvertikalen angeordnet sind. Diese Ausrichtung der Anschlußflansche ermöglicht eine Verschiebbarkeit relativ zu der Lenkradanbindung sowohl in Fahrzeuglängs- als auch in Fahrzeugquerrichtung.

Bei einer vorteilhaften Ausgestaltung nach Anspruch 9 umfaßt die Stirnwand in Bezug auf den Einbauzustand einen oberen Abschnitt, einen mittleren Abschnitt und einen unteren Abschnitt, wobei der obere Abschnitt aus einem linken und einem rechten Oberteil und der mittlere Abschnitt aus einem linken, einem mittleren und einem rechten Mittelteil zusammengesetzt sind. Es hat sich herausgestellt, daß eine solche Aufteilung der Stirnwand in mehrere Stirnwandteile einen besonders guten Kompromiß darstellt zwischen der Schaffung vielseitiger Ausgleichsmöglichkeiten einerseits und einer insgesamt geringen Bauteilzahl andererseits.

Bei einer Ausgestaltung nach Anspruch 10 haben die wenigstens zwei Stirnwandteile unterschiedliche Blechstärken. Die Stärke der einzelnen Stirnwandteile läßt sich den unterschiedlichen Belastungen, denen die einzelnen Bereiche der Stirnwand standzuhalten haben, optimal anpassen. Dadurch wird insgesamt eine deutliche Gewichtsreduktion erzielt. Außerdem kann das Aufschweißen von Verstärkungsblechen zumindest teilweise entfallen.

Die Erfindung wird im folgenden anhand eines Ausführungsbeispiels unter Bezugnahme auf die Zeichnungen näher erläutert. Von den Zeichnungen zeigen
Fig. 1 eine Aufsicht auf eine Stirnwand in vereinfachter Darstellung,
Fig. 2 einen Schnitt A-A durch die Stirnwand von Fig. 1,
Fig. 3a einen Schnitt B-B durch die Stirnwand von Fig. 1 in einer ersten Variante,
Fig. 3b einen Schnitt B-B durch die Stirnwand von Fig. 1 in einer zweiten Variante,
Fig. 4 4 einen Schnitt C-C durch die Stirnwand von Fig. 1,
Fig. 5 einen Schnitt D-D durch die Stirnwand von Fig. 1,
Fig. 6 einen Schnitt E-E durch die Stirnwand von Fig. 1,
Fig. 7 einen Schnitt F-F durch die Stirnwand von Fig. 1, und
Fig. 8 einen Schnitt G-G durch die Stirnwand von Fig. 1.

Die Figuren enthalten Koordinatenkreuze, aus denen die Orientierung der dargestellten Bauteile nach dem Einbau in das Kraftfahrzeug hervorgeht. Mit X ist die Fahrzeuglängsrichtung, mit Y die Fahrzeugquerrichtung und mit Z die senkrecht zur Bodenebene verlaufende Fahrzeugvertikale bezeichnet.

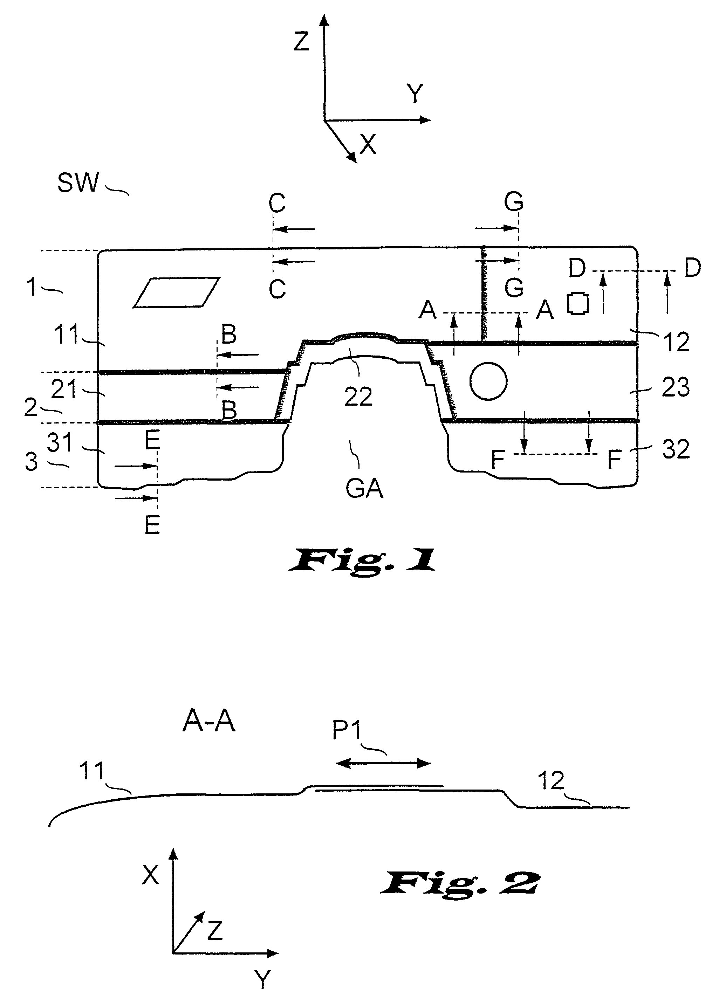

Fig. 1 zeigt in Aufsicht eine mehrteilige Stirnwand SW der Rohbaukarosserie eines Personenkraftfahrzeugs, wobei der Frontraum sich auf der dem Betrachter zugewandten Seite befindet. Erhebungen und Vertiefungen der Stirnwand in Fahrzeuglängsrichtung X, beispielsweise die den Fußraum der Fahrgastzelle bildenden Auswölbungen, sind in Fig. 1 nicht erkennbar. Die Stirnwand ist mit einer Vielzahl von in Fig. 1 nicht dargestellten Bohrungen versehen, die der Befestigung von Bauteilen im Frontraum und in der Fahrgastzelle dienen. Ferner sind mehrere größere Ausschnitte vorgesehen, durch die andere Bauteile wie etwa die Lenksäule oder Lüftungskanäle die Stirnwand durchdringen können. Von diesen Ausschnitten sind in Fig. 1 nur einige größere exemplarisch dargestellt und nicht näher bezeichnet. Im eingebauten Zustand wird die Stirnwand links und rechts von den A-Säulen der Rohbaukarosserie eingefaßt, während an der Oberseite der Stirnwand ein die Windschutzscheibe tragender Querträger verläuft. An ihrer Unterseite ist die Stirnwand mit einem Fahrzeugboden verschweißt. Auf der zum Betrachter weisenden Seite der Stirnwand sind außerdem zwei in den Frontraum ragende Fahrzeuglängsträger und eine Lenkungsanbindung zur Aufnahme der Lenksäulenhalterung befestigt.

In Richtung der Fahrzeugvertikalen Z ist die Stirnwand SW in drei Abschnitte 1, 2 und 3 unterteilt, die ihrerseits jeweils aus mehreren Teilen bestehen. Der Abschnitt 1 umfaßt - gegen die Fahrtrichtung gesehen - ein linkes Oberteil 11 und ein rechtes Oberteil 12, der Abschnitt 2 ein linkes Mittelteil 21, ein mittleres Mittelteil 22 und ein rechtes Mittelteil 23. Der untere Abschnitt 3 wird von zwei Unterteilen 31 und 32 gebildet, die jedoch durch den Getriebeausschnitt GA getrennt und deswegen nicht unmittelbar miteinander verbunden sind. Die Stirnwandteile bestehen aus Blechformstücken, die aus Blechtafeln tiefgezogen sind, und weisen umfangsseitig Anschlußflansche auf. Bei der Fertigung der Stirnwand werden die Stirnwandteile entlang der Anschlußflansche in Kontakt gebracht und dort miteinander verschweißt.

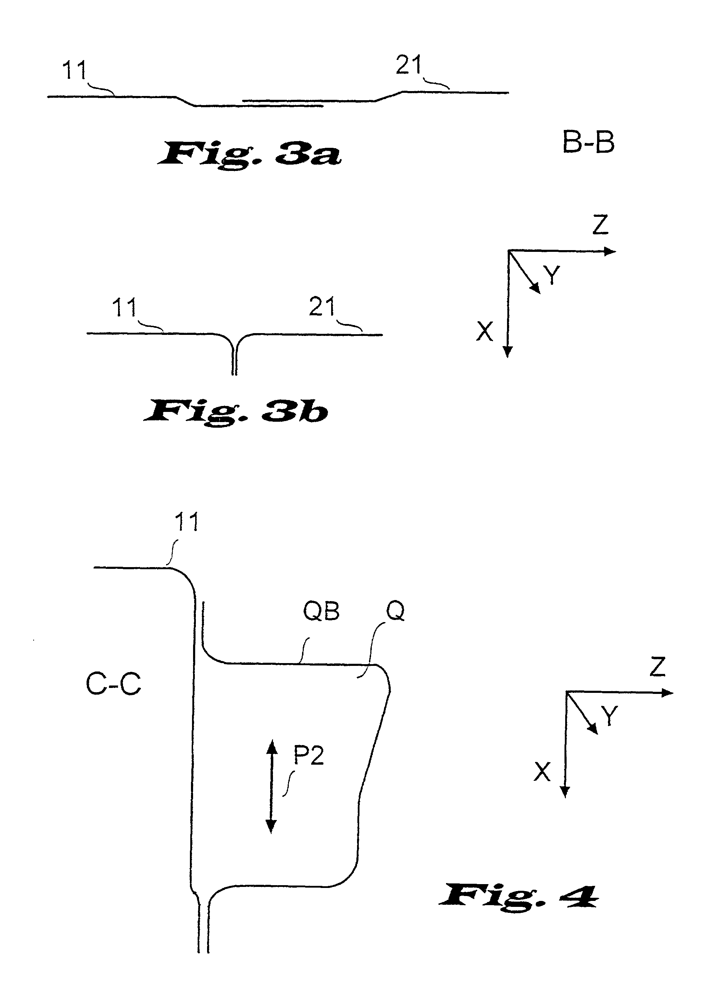

Die räumliche Ausrichtung der Anschlußflansche wird im folgenden anhand der übrigen Figuren näher erläutert. Fig. 2 zeigt die beiden in Fahrzeugquerrichtung benachbarten Stirnwandteile 11 und 12 in einem Schnitt A-A. Die Schiebeebenen der Anschlußflansche verlaufen dort in der Y-Z-Ebene, d.h. senkrecht zur Fahrzeuglängsrichtung X. Dadurch lassen sich die beiden Stirnwandteile 11 und 12 insbesondere in Richtung des Pfeils P1 zueinander verschieben, bevor sie miteinander verschweißt werden. Wird beispielsweise in der Anlaufphase der Kraftfahrzeugfertigung festgestellt, daß der tatsächliche Abstand der die Stirnwand in Fahrzeugquerrichtung Y begrenzenden A-Säulen geringfügig von dem bei der Konstruktion berechneten Sollwert abweicht, so ist bei der erfindungsgemäßen Stirnwand ein Ausgleich möglich, ohne daß Änderungen an den Stirnwandteilen als solchen erforderlich sind. Da die beiden Stirnwandteile 11 und 12 vor dem Verschweißen entlang der Anschlußflansche insbesondere in Fahrzeugquerrichtung Y zueinander verschiebbar sind, brauchen zur Schaffung des Ausgleiches die beiden Stirnwandteile lediglich in einer Lage in Y-Richtung miteinander verschweißt zu werden, die gegenüber dem ursprünglichen Sollwert entsprechend geändert ist.

Eine Verschiebbarkeit der Stirnwandteile 11 und 12 in Fahrzeugquerrichtung verlangt geeignet geformte Anschlußflansche auch zu den in der Fahrzeugvertikalen Z benachbarten Stirnwandteilen hin, hier also zu den Stirnwandteilen 21, 22 und 23. Den Fig. 3a und 3b, die beide die in der Fahrzeugvertikalen benachbarten Stirnwandteile 11 und 21 in einem Schnitt B-B zeigen, sind mögliche Varianten für diese Anschlußflansche entnehmbar. Bei der Variante gemäß Fig. 3a sind die Schiebeebenen der Anschlußflansche parallel zu den Schiebeebenen der Anschlußflansche der in Fahrzeugquerrichtung benachbarten Stirnwandteile, d.h. in der Y-Z-Ebene und somit senkrecht zur Fahrzeuglängsrichtung X. Bei der Variante gemäß Fig. 3b hingegen sind die Stirnwandteile so geformt, daß die Schiebeebenen der Anschlußflansche in der X-Y-Ebene, d.h. parallel zur Bodenebene des Kraftfahrzeugs, verlaufen. Um die gewünschte Verschiebbarkeit in Fahrzeugquerrichtung zu ermöglichen, genügt es natürlich, wenn die Schiebeebene dieser Anschlußflansche parallel zur Y-Achse verläuft. Die Orientierung der Schiebeebene bezüglich der X- und Z-Richtung unterliegt hingegen keinen Einschränkungen; die in den Fig. 3a und 3b dargestellten Varianten stellen insofern lediglich zwei Extremfälle dar, die aber keineswegs als Einschränkung aufzufassen sind.

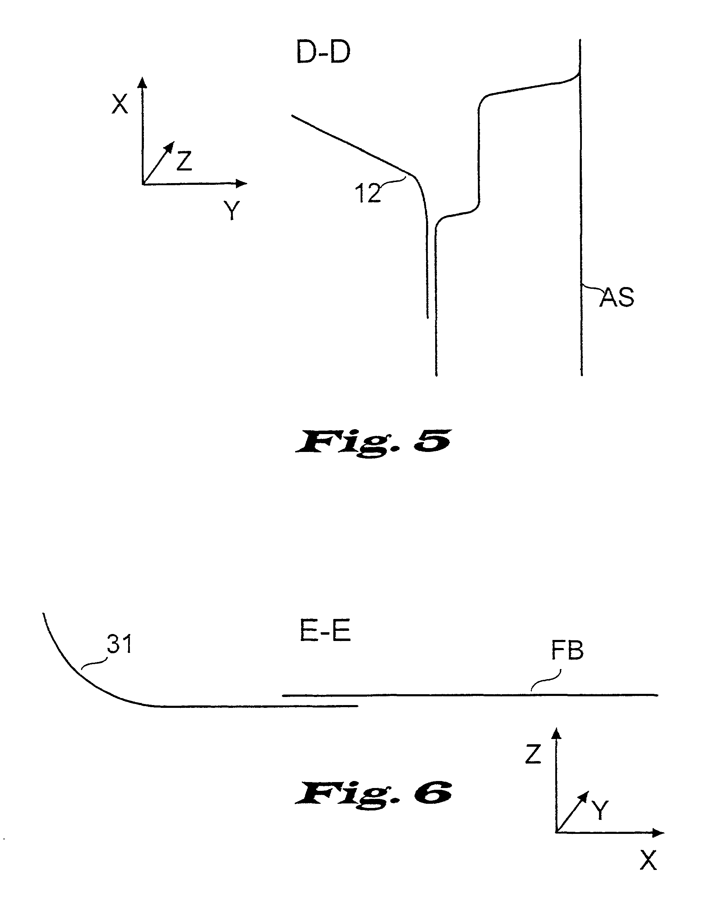

Die Verschiebbarkeit der Stirnwandteile muß auch gegenüber den an die Stirnwand angrenzenden Bauteilen gewährleistet sein. Fig. 4 zeigt in einem Schnitt C-C einen die Windschutzscheibe tragenden zweischaligen Querträger Q, dessen Oberschale im dargestellen Ausführungsbeispiel von einem Querträgerblech QB und dessen Unterschale von einem Anschlußflansch des linken Oberteils 11 gebildet wird. Die Schiebeebenen der Anschlußflansche verlaufen hier in der X-Y-Ebene, d.h. senkrecht zur Vertikalen Z. Auf diese Weise läßt sich das linke Oberteil 11 vor dem Verschweißen gegenüber dem Querträgerblech in Fahrzeugquerrichtung Y verschieben, wodurch bei Paßungenauigkeiten ein Ausgleich geschaffen werden kann.

Fig. 5 zeigt in einem Schnitt D-D die Anschlußflansche zwischen dem rechten Oberteil 12 und der rechten A-Säule AS der Rohbaukarosserie. Die Schiebeebene der Anschlußflansche verläuft in der X-Z-Ebene, d.h. senkrecht zur Fahrzeugquerrichtung Y. Eine Verschiebbarkeit in der Fahrzeugquerrichtung ist hier nicht möglich, da die A-Säulen feste seitliche Begrenzungen der Rohbaukarosserie darstellen. Dafür kann das rechte Oberteil 12 in Fahrzeuglängsrichtung X und in der Fahrzeugvertikalen Z vor dem Verschweißen verschoben werden. Welche Verschiebungsmöglichkeiten im einzelnen bestehen, richtet sich natürlich nach der Ausbildung der Anschlußflansche zwischen den Stirnwandabschnitten. Falls das rechte Oberteil 12 mit dem darunter liegenden rechten Mittelteil 23 über die in Fig. 3a dargestellten Anschlußflansche verbunden ist, so kann das Oberteil 12 vor dem Verschweißen in der Fahrzeugvertikalen verschoben werden. Bei der Variante nach Fig. 3b besteht hingegen eine Verschiebbarkeit in Fahrzeuglängsrichtung X.

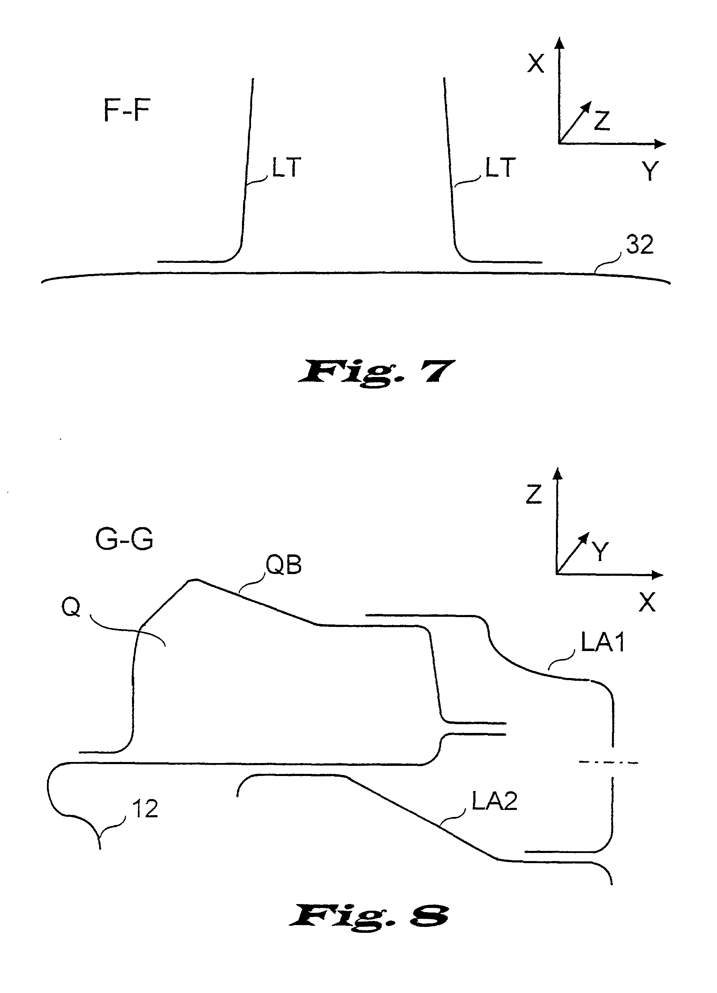

Fig. 6 zeigt in einem Schnitt E-E die Anschlußflansche zwischen dem linken Unterteil 31 und einem Fahrzeugboden FB. Die Schiebeebene der Anschlußflansche verläuft in der X-Y-Ebene, d.h. senkrecht zur Fahrvertikalen Z. Fig. 7 zeigt in einem Schnitt F-F die Anschlußflansche zwischen dem rechten Unterteil 32 und einem Fahrzeuglängsträger LT. Die Schiebeebene der Anschlußflansche verläuft in der Y-Z-Ebene, d.h. senkrecht zur Fahrzeuglängsrichtung X. Fig. 8 zeigt schließlich in einem Schnitt G-G die Anschlußflansche zwischen dem rechten Oberteil 12, einer Oberschale QB eines die Windschutzscheibe tragenden zweischaligen Querträgers Q sowie einer Lenkradanbindung, die zwei Blechteile LA1 und LA2 umfaßt. Die Schiebeebenen aller Anschlußflansche verlaufen in der X-Y-Ebene und damit senkrecht zur Fahrzeugvertikalen.

Es versteht sich, daß die vorstehenden Richtungsangaben nur die ungefähre Orientierung der Schiebeebenen angeben, da Stirnwände häufig stark gekrümmte Bereiche aufweisen, in denen die Stirnwand nicht wie angenommen im wesentlichen in der Y-Z-Ebene verläuft. In diesen Bereichen sind die vorstehenden Richtungsangaben entsprechend abzuändern.

## Patentansprüche

1. Mehrteilige Stirnwand (SW) einer Kraftfahrzeugrohbaukarosserie, bei welcher zwei in Fahrzeugquerrichtung benachbarte Stirnwandteile über Anschlussflansche miteinander verbunden sind,
**dadurch gekennzeichnet, dass**
die Anschlussflansche Schiebeebenen aufweisen, die im wesentlichen senkrecht zur Fahrzeuglängsrichtung (X) angeordnet sind.

2. Stirnwand nach Anspruch 1,
**dadurch gekennzeichnet, daß**
die wenigstens zwei in Fahrzeugquerrichtung benachbarten Stirnwandteile (11, 12; 21, 22, 23) mit wenigstens einem in Richtung der Fahrzeugvertikalen (Z) dazu benachbarten Stirnwandteil (21, 22, 23; 11, 12; 31, 32) über Anschlußflansche miteinander verbunden sind, deren Schiebeebenen im wesentlichen senkrecht zur Fahrzeuglängsrichtung (X) angeordnet sind.

3. Stirnwand nach Anspruch 1,
**dadurch gekennzeichnet, daß**
die wenigstens zwei in Fahrzeugquerrichtung benachbarten Stirnwandteile (11, 12; 21, 22, 23) mit wenigstens einem in Richtung der Fahrzeugvertikalen dazu benachbarten Stirnwandteil (21, 22, 23; 11, 12; 31, 32) über Anschlußflansche miteinander verbunden sind, deren Schiebeebenen im wesentlichen senkrecht zur Fahrzeugvertikalen (Z) angeordnet sind.

4. Stirnwand nach einem der vorhergehenden Ansprüche,
**dadurch gekennzeichnet, daß**
mit der A-Säule (AS) der Rohbaukarosserie benachbarte Stirnwandteile (12) mit dieser über Anschlußflansche miteinander verbunden sind, deren Schiebeebenen im wesentlichen senkrecht zur Fahrzeugquerrichtung (Y) angeordnet sind.

5. Stirnwand nach einem der vorhergehenden Ansprüche,
**dadurch gekennzeichnet, daß**
mit einem Windschutzscheibenquerträger (Q) der Rohbaukarosserie benachbarte Stirnwandteile (11) mit diesem über Anschlußflansche miteinander verbunden sind, deren Schiebeebenen im wesentlichen senkrecht zur Fahrzeugvertikalen (Z) angeordnet sind.

6. Stirnwand nach einem der vorhergehenden Ansprüche,
**dadurch gekennzeichnet, daß**
mit einem Fahrzeugboden (FB) der Rohbaukarosserie benachbarte Stirnwandteile (31) mit diesem über Anschlußflansche miteinander verbunden sind, deren Schiebeebenen im wesentlichen senkrecht zur Fahrzeugvertikalen (Z) angeordnet sind.

7. Stirnwand nach einem der vorhergehenden Ansprüche,
**dadurch gekennzeichnet, daß**
mit einem Fahrzeuglängsträger (LT) der Rohbaukarosserie benachbarte Stirnwandteile (32) mit diesem über Anschlußflansche miteinander verbunden sind, deren Schiebeebenen im wesentlichen senkrecht zur Fahrzeuglängsrichtung (X) angeordnet sind.

8. Stirnwand nach einem der vorhergehenden Ansprüche,
**dadurch gekennzeichnet, daß**
mit einer Lenkradanbindung (LA1, LA2) der Rohbaukarosserie benachbarte Stirnwandteile (31) mit dieser über Anschlußflansche miteinander verbunden sind, deren Schiebeebenen im wesentlichen senkrecht zur Fahrzeugvertikalen (Z) angeordnet sind.

9. Stirnwand nach einem der vorhergehenden Ansprüche,
**dadurch gekennzeichnet, daß**
die Stirnwand in Bezug auf den Einbauzustand einen oberen Abschnitt (1), einen mittleren Abschnitt (2) und einen unteren Abschnitt (3) umfaßt, wobei der obere Abschnitt aus einem linken (11) und einem rechten (12) Oberteil und der mittlere Abschnitt aus einem linken (21), einem mittleren (22) und einem rechten Mittelteil (23) zusammengesetzt sind.

10. Stirnwand nach einem der vorhergehenden Ansprüche,
**dadurch gekennzeichnet, daß**
die wenigstens zwei Stirnwandteile unterschiedliche Blechstärken haben.

## Claims

1. A multi-part bulkhead (SW) of a motor vehicle body-in-white in which two bulkhead parts adjacent across the width of the vehicle are connected together by means of connecting flanges,
**characterised in that**
the connecting flanges have planes of adjustment which are positioned essentially perpendicular in relation to the longitudinal axis (X) of the vehicle.

2. A bulkhead in accordance with claim 1,
**characterised in that**
the at least two bulkhead parts (11, 12; 21, 22, 23) adjacent across the width of the vehicle are connected to at least one bulkhead part (21, 22, 23; 11, 12; 31, 32) adjacent thereto in relation to the vertical axis of the vehicle by means of connecting flanges which have planes of adjustment which are positioned essentially perpendicular to the longitudinal axis (X) of the vehicle.

3. A bulkhead in accordance with claim 1,
**characterised in that**
the at least two bulkhead parts (11, 12; 21, 22, 23) adjacent across the width of the vehicle are connected to at least one bulkhead part (21, 22, 23; 11, 12; 31, 32) adjacent thereto in relation to the vertical axis of the vehicle by means of connecting flanges which have planes of adjustment which are positioned essentially perpendicular to the vertical axis (Z) of the vehicle.

4. A bulkhead in accordance with one of the preceding claims,
**characterised in that**
bulkhead parts (12) adjacent to the A-pillar (AS) of the body-in-white are connected to said A-pillar via connecting flanges which have planes of adjustment which are positioned essentially perpendicular to the transverse axis (Y) of the vehicle.

5. A bulkhead in accordance with one of the preceding claims,
**characterised in that**
bulkhead parts (11) adjacent to a windshield crossmember (Q) of the body-in-white are connected to said windshield crossmember via connecting flanges which have planes of adjustment which are positioned essentially perpendicular to the vertical axis (Z) of the vehicle.

6. A bulkhead in accordance with one of the preceding claims,
**characterised in that**
bulkhead parts (31) adjacent to a vehicle floor (FB) of the body-in-white are connected to said vehicle floor via connecting flanges which have planes of adjustment which are positioned essentially perpendicular to the vertical axis (Z) of the vehicle.

7. A bulkhead in accordance with one of the preceding claims,
**characterised in that**
bulkhead parts (32) adjacent to a side member (LT) of the body-in-white are connected to said vehicle side member via connecting flanges which have planes of adjustment which are positioned essentially perpendicular to the longitudinal axis (X) of the vehicle.

8. A bulkhead in accordance with one of the preceding claims,
**characterised in that**
bulkhead parts (31) adjacent to a steering wheel connection (LA1, LA2) of the body-in-white are connected to said steering wheel connection via connecting flanges which have planes of adjustment which are positioned essentially perpendicular to the vertical axis of the vehicle.

9. A bulkhead in accordance with one of the preceding claims,
**characterised in that**
in relation to its fitted position the bulkhead comprises an upper section (1), a central section (2) and a lower section (3), the upper section consisting of a left-hand (11) and a right-hand (12) upper part and the central section consisting of a left-hand (21), a central (22) and a right-hand central part (23).

10. A bulkhead in accordance with one of the preceding claims,
**characterised in that**
the at least two bulkhead parts are of different sheet thicknesses.

## Revendications

1. Cloison pare-feu (SW) de la carrosserie d'un véhicule automobile, dans laquelle deux pièces de la cloison pare-feu voisines dans le sens transversal du véhicule sont reliées à l'aide de brides d'assemblage, **caractérisée en ce que** les brides d'assemblage présentent des plans de coulissement, qui sont disposés pour l'essentiel perpendiculairement au sens longitudinal (X) du véhicule.

2. Cloison pare-feu selon la revendication 1,
**caractérisée en ce qu'**au moins deux pièces (11, 12 ; 21, 22, 23) de la cloison pare-feu voisines dans le sens transversal du véhicule sont reliées à au moins une pièce de la cloison pare-feu (21, 22, 23 ; 11, 12 ; 31, 32) voisine dans le sens vertical du véhicule (Z) à l'aide de brides d'assemblage dont les plans de coulissement sont disposés pour l'essentiel perpendiculairement au sens longitudinal du véhicule (X).

3. Cloison pare-feu selon la revendication 1,
**caractérisée en ce qu'**au moins deux pièces (11, 12 ; 21, 22, 23) de la cloison pare-feu voisines dans le sens transversal du véhicule sont reliées à au moins une pièce de la cloison pare-feu (21, 22, 23 ; 11, 12 ; 31, 32) voisine dans le sens vertical du véhicule à l'aide de brides d'assemblage dont les plans de coulissement sont disposés pour l'essentiel perpendiculairement à la verticale du véhicule (Z).

4. Cloison pare-feu selon l'une quelconque des revendications précédentes, **caractérisée en ce que** les pièces (12) de la cloison pare-feu voisines de la colonne A (AS) de la carrosserie brute sont reliées à celle-ci à l'aide de brides d'assemblage dont les plans de coulissement sont disposés pour l'essentiel perpendiculairement au sens transversal du véhicule (Y).

5. Cloison pare-feu selon l'une quelconque des revendications précédentes, **caractérisée en ce que** les pièces (11) de la cloison pare-feu voisines d'un support de pare-brise (Q) sont reliées à celui-ci à l'aide de brides d'assemblage dont les plans de coulissement sont disposés pour l'essentiel perpendiculairement à la verticale du véhicule (Z).

6. Cloison pare-feu selon l'une quelconque des revendications précédentes, **caractérisée en ce que** les pièces (31) de la cloison pare-feu voisines d'un fond de caisse (FB) de la carrosserie brute sont reliées à celui-ci à l'aide de brides d'assemblage dont les plans de coulissement sont disposés pour l'essentiel perpendiculairement à la verticale du véhicule (Z).

7. Cloison pare-feu selon l'une quelconque des revendications précédentes, **caractérisée en ce que** les pièces (32) de la cloison pare-feu voisines d'un longeron (LT) de la carrosserie brute sont reliées à celui-ci à l'aide de brides d'assemblage dont les plans de coulissement sont disposés pour l'essentiel perpendiculairement au sens longitudinal du véhicule (X).

8. Cloison pare-feu selon l'une quelconque des revendications précédentes, **caractérisée en ce que** les pièces (31) de la cloison pare-feu voisines d'un raccord de volant (LA1, LA2) de la carrosserie brute sont reliées à celui-ci à l'aide de brides d'assemblage dont les plans de coulissement sont disposés pour l'essentiel perpendiculairement à la verticale du véhicule (Z).

9. Cloison pare-feu selon l'une quelconque des revendications précédentes, **caractérisée en ce que** par rapport à l'état monté la cloison pare-feu comprend un tronçon supérieur (1), un tronçon central (2) et un tronçon inférieur (3), le tronçon supérieur étant composé par une partie supérieure gauche (11) et une partie supérieure droite (12), et le tronçon central par une partie gauche (21), une partie centrale (22) et une partie droite (23).

10. Cloison pare-feu selon l'une quelconque des revendications précédentes, **caractérisée en ce qu'**au moins deux pièces de la cloison pare-feu présentent des épaisseurs de tôle différentes.
